# EUROPÄISCHE PATENTSCHRIFT

(11) **EP 2 771 217 B1**
(45) Veröffentlichungstag und Bekanntmachung des Hinweises auf die Patenterteilung: **29.06.2016**
(21) Anmeldenummer: 12768819.0
(22) Anmeldetag: 04.10.2012
(51) Int. Cl.: B60T 8/36, F16K 31/06

(54) **MAGNETVENTIL SOWIE VERFAHREN ZUR MONTAGE EINES MAGNETVENTILS**
SOLENOID VALVE AND METHOD FOR ASSEMBLING A SOLENOID VALVE
ÉLECTROVANNE ET PROCÉDÉ POUR LE MONTAGE D'UNE ÉLECTROVANNE

(30) Priorität: 26.10.2011 DE 102011085257
(43) Veröffentlichungstag der Anmeldung: 03.09.2014
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2012/069577
(87) Internationale Veröffentlichungsnummer: WO 2013/060560

(56) Entgegenhaltungen:
- EP-A1- 0 497 146
- WO-A1-2008/110438
- DE-A1- 3 404 188
- DE-A1- 3 404 189
- DE-A1- 3 914 094

## Beschreibung

Die Erfindung betrifft ein Magnetventil mit einer Magnetbaugruppe und einem Ventilgehäuse, wobei das Ventilgehäuse einen Ventileinsatz, der die aus wenigstens einer Magnetspule und einem Wicklungsträger bestehende Magnetbaugruppe wenigstens bereichsweise umgreift, und ein hülsenartiges und/oder haubenartiges Führungselement, das einen mittels der Magnetbaugruppe axial verlagerbaren Magnetanker führt, aufweist, wobei der Magnetanker mit einem in der Geschlossenstellung mit einem Ventilsitz des Magnetventils zum Unterbrechen einer Strömungsverbindung durch das Magnetventil dichtend zusammenwirkenden Schließelement wirkverbunden ist und das Führungselement den Magnetanker in jeder möglichen Stellung des Magnetankers in axialer Richtung lediglich teilweise übergreift. Die Erfindung betrifft weiterhin ein Verfahren zur Montage eines Magnetventils.

### Stand der Technik

Magnetventile der eingangs genannten Art sind aus dem Stand der Technik bekannt. Sie werden beispielsweise in Antiblockiersystemen, elektronischen Stabilitätsprogrammsystemen und/oder Antriebsschlupfregelungssystemen eingesetzt. Derartige Magnetventile weisen jeweils wenigstens eine Magnetbaugruppe und ein Ventilgehäuse auf. Durch Zusammenwirken eines in dem Ventilgehäuse beziehungsweise in dem Führungselement des Ventilgehäuses verlagerbar angeordneten Magnetankers mit dem Schließelement und entsprechend dem Ventilsitz, ist der Volumenstrom eines Fluids durch das Magnetventil einstellbar. Die Verlagerung des Magnetankers und damit des Schließelements wird durch die Magnetbaugruppe beziehungsweise deren Magnetspule bewirkt. In der Geschlossenstellung ist das Schließelement bezüglich des Ventilssitzes derart angeordnet, dass die Strömungsverbindung durch das Magnetventil beziehungsweise den Ventilsitz unterbrochen ist. In einer Offenstellung dagegen gibt das Schließelement den Ventilsitz wenigstens teilweise frei, sodass das Fluid den Ventilsitz und damit das Magnetventil durchströmen kann. Der Magnetanker ist in dem Führungselement gelagert, sodass er in axialer Richtung mittels der Magnetbaugruppe verlagerbar ist. Dabei soll das Führungselement den Magnetanker in radialer Richtung führen, also keine oder lediglich eine geringe Verlagerung des Magnetankers in radialer Richtung zulassen. Zu diesem Zweck ist es üblicherweise vorgesehen, dass das Führungselement den Magnetanker an wenigstens einer Axialposition in Umfangsrichtung wenigstens teilweise umgreift.

Bei aus dem Stand der Technik bekannten Magnetventilen erstreckt sich das Führungselement bis hin zu dem Ventileinsatz und ist an diesem befestigt. Häufig umgreift das Führungselement den Ventileinsatz zu diesem Zweck. Beispielsweise zeigt die DE 10 2006 055 831 A1 ein Magnetventil mit einer Magnetbaugruppe und einer Ventilpatrone, die eine Kapsel, einen innerhalb der Kapsel beweglich angeordneten Anker mit einem ersten Schließelement, das dichtend mit einem Hauptventilsitz zusammenwirkt, und ein integriertes Rückschlagventil umfasst, das einen Rückschlagventilsitz und ein zweites Schließelement aufweist, wobei eine von der Magnetbaugruppe erzeugte Magnetkraft den Anker mit dem ersten Schließelement bewegt, wodurch das erste Schließelement mit einem Dichtbereich dichtend in den Hauptventilsitz eintaucht. Dabei ist ein mit der Kapsel verbundenes Ventilsitzelement vorhanden, in das der Hauptventilsitz, der Rückschlagventilsitz, Strömungskanäle und ein Filterelement integriert sind. Der in einem derartigen Magnetventil vorliegende magnetisch wirksame Querschnitt von Ventileinsatz und Magnetanker ist relativ klein. Dies gilt entsprechend ebenso für die Magnetkraft, welche von der Magnetbaugruppe auf den Magnetanker ausgeübt werden kann und deren Stellbarkeit.

Weiterhin beschreibt die Druckschrift DE 34 04 189 A1 ein von einem regelbaren Elektromagneten betätigtes hydraulisches Ventil. Zur flüssigkeitsdichten Kapselung eines von einem regelbaren Elektromagneten betätigten Ventils ist zwischen dem Magnetraum und dem Ventilgehäuseraum ein elastisch nachgiebiges Trennelement vorgesehen. Auf der Seite des Ventilgehäuseraums ist vor dem Trennelement eine von hydraulischer Flüssigkeit im Nebenstrom zum Hauptstrom durchströmte Kammer vorgesehen, in der durch Saugwirkung der auf das Trennelement wirkende Strömungsmitteldruck abgebaut wird. Damit werden vom Strömungsmittel verursachte auf das Trennelement und damit auf den Stößel des Ventils wirkende zusätzliche Kräfte vermieden und das proportionale Verhalten zwischen Magnetkraft und Strömungsmitteldruck verbessert.

Schließlich zeigt die Druckschrift WO 2008/110438 A1 ein Elektromagnetventil, dessen Hülse einen magnetisierbaren Abschnitt aufweist, der durch den dom- oder topfförmigen Endabschnitt an der Hülse gebildet ist, der als separates, magnetisierbares Bauteil ausgeführt ist, welcher kraft- und/oder stoffschlüssig mit der Hülse verbunden ist.

Aus dem Stand der Technik sind weiterhin die Druckschriften EP 0 497 146 A1, DE 39 14 094 A1 sowie DE 34 04 188 A1 bekannt.

### Offenbarung der Erfindung

Gegenüber dem Stand der Technik weist das Magnetventil mit den in Anspruch 1 genannten Merkmalen den Vorteil auf, dass der magnetisch wirksame Querschnitt größer ist, sodass eine größere Magnetkraft beziehungsweise eine bessere Stellbarkeit des Magnetventils erzielt wird. Dies wird erfindungsgemäß erreicht, indem an dem Ventilgehäuse eine Aufnahme für die Magnetbaugruppe vorgesehen ist, die mit einem an dem Ventilgehäuse befestigten Abdeckelement verschlossen ist, wobei das Abdeckelement derart zwischen dem Ventileinsatz und dem Führungselement eingepresst ist, dass eine kraftschlüssige Befestigung des Abdeckelements zumindest an dem Ventileinsatz gegeben ist, wobei das Führungselement in axialer Richtung an die Magnetbaugruppe unmittelbar angrenzt oder von ihr beabstandet ist, und wobei die Aufnahme mit einer den Ventilsitz aufweisenden Ventilkammer zumindest zeitweise strömungstechnisch verbunden ist. Grundsätzlich ist also zunächst vorgesehen, dass das Führungselement den Magnetanker in axialer Richtung lediglich teilweise übergreift. Das Führungselement ist haubenartig ausgeführt.

Weil das Führungselement haubenartig ausgebildet ist, ist die Führungsausnehmung auf einer Seite in axialer Richtung begrenzt. Üblicherweise ist das Führungselement auf seiner dem Ventilsitz beziehungsweise dem Ventileinsatz abgewandten Seite verschlossen, sodass es einen Deckel des Magnetventils beziehungsweise des Ventilgehäuses ausbildet. Entsprechend ist das Führungselement auf der anderen Seite geöffnet. Der Magnetanker ist nun derart angeordnet, dass er in Umfangsrichtung wenigstens bereichsweise von der Magnetbaugruppe umgriffen ist. Die Magnetbaugruppe erstreckt sich demnach in Umfangsrichtung wenigstens abschnittsweise um den Magnetanker herum. Bei aus dem Stand der Technik bekannten Magnetventilen liegt das Führungselement in radialer Richtung zwischen dem Magnetanker und der Magnetbaugruppe vor, um auch die Magnetbaugruppe gegenüber den fluidführenden Bereichen abzudichten.

Erfindungsgemäß ist es dagegen nun vorgesehen, dass das Führungselement den Magnetanker in axialer Richtung in jeder möglichen Stellung des Magnetankers lediglich teilweise übergreift. Unter Übergreifen ist dabei zu verstehen, dass das Führungselement und der Magnetanker an wenigstens einer gemeinsamen axialen Position vorliegen. Dabei ist es vorzugsweise vorgesehen, dass zwischen dem Führungselement und dem Magnetanker in radialer Richtung kein oder lediglich ein geringer Abstand, beispielsweise in Form eines Luftbeziehungsweise Fluidspalts, vorliegt. Unabhängig davon, ob sich der Magnetanker in der Geschlossenstellung oder der Offenstellung beziehungsweise in einer zwischen diesen beiden Stellungen liegenden Zwischenstellung befindet, ist der Magnetanker nie derart angeordnet, dass er vollständig in dem Führungselement vorliegt. Vorzugsweise weist dazu das Führungselement und insbesondere dessen Führungsausnehmung eine geringere Erstreckung in axialer Richtung auf als der Magnetanker. Auf diese Weise kann ein Magnetventil realisiert werden, bei welchem zwischen dem Magnetanker und der Magnetbaugruppe in radialer Richtung lediglich ein Luftspalt beziehungsweise Fluidspalt vorliegt. Der Magnetfluss wird demnach nicht oder wenigstens lediglich geringfügig von dem Führungselement abgeschwächt.

Mit einer derartigen Ausgestaltung des Magnetventils kann insbesondere der magnetisch wirksame Querschnitt von Ventileinsatz und Magnetanker vergrößert werden. Dies führt zu einer Vergrößerung der Magnetkraft, welche von der Magnetbaugruppe auf den Magnetanker maximal ausgeübt werden kann, und zusätzlich oder alternativ zu einem verbesserten Magnetkraftverlauf, also einer besseren Stellbarkeit des Magnetventils. Das bedeutet jedoch auch, dass die Magnetbaugruppe nicht mehr durch das Führungselement gegenüber den fluidführenden Bereichen des Magnetventils abgedichtet ist. Somit kann die Magnetbaugruppe wenigstens bereichsweise von dem in dem Magnetventil vorliegenden Fluid umspült oder überspült werden. Vorzugsweise wird daher das Material der Magnetbaugruppe und insbesondere der Magnetspule derart gewählt, dass es gegenüber dem Fluid wenigstens größtenteils, insbesondere vollständig inert ist. Weil zur Ansteuerung der Magnetbaugruppe ein elektrischer Anschluss vorliegen muss, welcher nach außen geführt wird, wird vorzugsweise eine Ausnehmung, durch welche der elektrische Anschluss nach außen geführt ist, mit einer Dichtung verschlossen.

Die Erfindung sieht vor, dass an dem Ventilgehäuse eine Aufnahme für die Magnetbaugruppe vorgesehen ist, die mit einem an dem Ventilgehäuse befestigten Abdeckelement verschlossen ist. Bei aus dem Stand der Technik bekannten Magnetventilen ist es üblicherweise vorgesehen, dass die Magnetbaugruppe und das Ventilgehäuse vor einer Montage des Magnetventils getrennt voneinander vorliegen. Beispielsweise ist die Magnetbaugruppe einem Steuergerät zugeordnet, mittels welcher das Magnetventil gesteuert beziehungsweise geregelt wird. Bei der Montage des Magnetventils wird bei einer solchen Ausführung zunächst das Ventilgehäuse mitsamt dem Magnetanker und dem Schließelement in eine Montageausnehmung eines Gehäuses eingesetzt. Anschließend wird die Magnetbaugruppe, insbesondere zusammen mit dem Steuergerät, auf das Magnetventil aufgesetzt. Durch diese in mehreren Schritten ausgeführte Montage ergeben sich Toleranzen, welche die Effizienz der Nutzung des durch die Bestromung der Magnetbaugruppe erzeugten magnetischen Felds deutlich verringert.

Es soll demnach vorgesehen sein, dass die Magnetbaugruppe an oder in dem Ventilgehäuse integriert ist, sodass eine gemeinsame Montage von Magnetbaugruppe und Ventilgehäuse erfolgen kann. Das bedeutet, dass bereits vor der Montage die Magnetbaugruppe bezüglich des Ventilgehäuses ortsfest angeordnet ist. Bei der Montage wird nun das bereits vollständige Magnetventil in die Montageausnehmung eingesetzt. Zur Integration der Magnetbaugruppe weist das Ventilgehäuse die Aufnahme für die Magnetbaugruppe auf. Zur Ausbildung der Aufnahme kann es vorgesehen sein, dass das Ventilgehäuse und insbesondere das Führungselement die Magnetbaugruppe zumindest bereichsweise in Umfangsrichtung umgreift. Die Aufnahme ist mit dem Abdeckelement verschlossen. Dabei ist das Abdeckelement an dem Ventilgehäuse, insbesondere an dem Führungselement, befestigt. Eine solche Ausgestaltung des Magnetventils ist vorzugsweise zusätzlich zu dem lediglich teilweisen Übergreifen des Magnetankers durch das Führungselement in axialer Richtung erwünscht. Es kann jedoch auch alternativ zu diesem vorgesehen sein, insbesondere weil die Anordnung der Magnetbaugruppe in der Aufnahme des Ventilgehäuses, welche mit dem an dem Ventilgehäuse befestigten Abdeckelement verschlossen ist, das lediglich teilweise Übergreifen erst ermöglich.

Besonders bevorzugt ist die Verbindung zwischen dem Ventilgehäuse und dem Abdeckelement beziehungsweise die Verbindungsstelle der beiden Elemente aus der Umgebung des Magnetventils zugänglich. Das bedeutet, dass das Verbinden auch erst nach dem Anordnen von Ventilgehäuse und Magnetbaugruppe in der Montageausnehmung vorgenommen werden kann, also nicht notwendigerweise bereits vor der Montage erfolgen muss. Die Verbindung kann beispielsweise stoffschlüssig und/oder formschlüssig ausgebildet sein. Die stoffschlüssige Verbindung wird beispielsweise durch Schweißen, vorzugsweise durch Laserschweißen, hergestellt. Die formschlüssige Verbindung wird zum Beispiel durch Verstemmen, insbesondere Dichtverstemmen, Bördeln oder dergleichen ausgebildet. Zur Herstellung der Verbindung ist es daher in jedem Fall vorteilhaft, wenn sie von der Umgebung des Magnetventils aus zugänglich ist.

Es ist vorgesehen, dass das Führungselement in axialer Richtung an die Magnetbaugruppe unmittelbar angrenzt oder von ihr beabstandet ist. Bei dieser Ausführungsform wird lediglich auf die axiale Richtung abgestellt, wobei die Anordnung der beiden Teile zueinander in radialer Richtung unerheblich ist. Speziell bei dieser Ausführungsform, in welchem die Magnetbaugruppe und das Führungselement in axialer Richtung unmittelbar aneinander angrenzen oder voneinander beabstandet sind, kann ein maximaler Magnetfluss zwischen der Magnetbaugruppe und dem Magnetanker sichergestellt werden, weil das Führungselement nicht zwischen Magnetbaugruppe und Magnetanker vorliegt. Zudem ist die Aufnahme mit einer den Ventilsitz aufweisenden Ventilkammer zumindest zeitweise strömungstechnisch verbunden. Die Ventilkammer liegt auf der dem Schließelement zugewandten Seite des Ventilsitzes vor. Insbesondere durchgreift das Schließelement die Ventilkammer wenigstens bereichsweise. Zusätzlich kann die Ventilkammer auch in weiteren Bereichen des Magnetventils vorliegen. Beispielsweise erstreckt sie sich bis in eine Ausnehmung des Ventileinsatzes und/oder des Magnetankers. Weil das Führungselement den Magnetanker in axialer Richtung lediglich teilweise übergreifen soll, ermöglicht es keine Abdichtung zwischen der Ventilkammer und der Magnetbaugruppe. Insoweit ist die Ventilkammer zumindest zeitweise strömungstechnisch mit der Aufnahme für die Magnetbaugruppe verbunden, sodass letztere zumindest zeitweise mit dem in der Ventilkammer vorliegenden Fluid in Kontakt gerät. Die strömungstechnische Verbindung muss dabei nicht in jeder Stellung des Magnetankers beziehungsweise des Schließelements vorliegen. Es kann beispielsweise vorgesehen sein, dass in wenigstens einer Stellung der Magnetanker zumindest teilweise dichtend mit dem Ventileinsatz zusammenwirkt und so die strömungstechnische Verbindung unterbricht. Dies ist insbesondere in der Geschlossenstellung vorgesehen.

Eine Weiterbildung der Erfindung sieht vor, dass das Ventilgehäuse das Führungselement und den die Aufnahme ausbildenden oder mit ausbildenden Ventileinsatz aufweist, wobei die Magnetbaugruppe das Führungselement und/oder der Ventileinsatz die Magnetbaugruppe wenigstens bereichsweise umgreift. Wie bereits vorstehend ausgeführt, besteht das Ventilgehäuse zumindest aus dem Führungselement und dem Ventileinsatz. Dabei bildet der Ventileinsatz die Aufnahme wenigstens bereichsweise aus. Es soll nun vorgesehen sein, dass die Magnetbaugruppe das Führungselement wenigstens bereichsweise umgreift. Alternativ oder zusätzlich kann auch der Ventileinsatz die Magnetbaugruppe wenigstens bereichsweise umgreifen. Zusammen mit den voranstehenden Ausführungen ergibt sich somit, dass sowohl das Ventilgehäuse die Magnetbaugruppe umgreifen kann, als auch die Magnetbaugruppe das Ventilgehäuse. Entsprechend ist beispielsweise der Ventileinsatz zur Ausbildung der Aufnahme U-förmig gestaltet, wobei zwischen den beiden Schenkeln des Ventileinsatzes entsprechend die Aufnahme vorliegt.

Eine Weiterbildung der Erfindung sieht vor, dass die Magnetbaugruppe, insbesondere der Wicklungsträger der Magnetbaugruppe, in radialer Richtung nur durch einen Fluidspalt von dem Magnetanker beabstandet ist. Das bedeutet, dass zwischen der Magnetbaugruppe und dem Magnetanker keine weiteren Elemente des Magnetventils vorgesehen sind. Vielmehr liegt in radialer Richtung zwischen der Magnetbaugruppe und dem Magnetanker lediglich der mit Fluid gefüllte Fluidspalt beziehungsweise der Luftspalt vor. Auf diese Weise wird der Magnetfluss zwischen Magnetbaugruppe und Magnetanker maximiert.

Besonders vorteilhaft ist es dabei, wenn der Wicklungsträger der Magnetbaugruppe derart angeordnet ist, dass er in radialer Richtung lediglich durch den Fluidspalt von dem Magnetanker beabstandet ist. Auf diese Weise wird die Magnetspule der Magnetbaugruppe vor eventuellen mechanischen Einflüssen durch den Magnetanker geschützt, sodass ein zuverlässiger und dauerhafter Betrieb des Magnetventils erzielt wird. Insbesondere ist der Fluidspalt in radialer Richtung derart bemessen, dass der Magnetanker auch bei einem von dem Führungselement toleranzbedingt zugelassenen Verkippen nicht in Kontakt mit der Magnetbaugruppe, insbesondere dem Wicklungsträger, treten kann.

Eine Weiterbildung der Erfindung sieht vor, dass der Ventileinsatz einen inneren Hohlzylinder, einen äußeren Hohlzylinder und ein die Hohlzylinder in radialer Richtung verbindendes Ringelement aufweist, wobei der innere Hohlzylinder von der Magnetbaugruppe wenigstens bereichsweise umgriffen ist. Der Ventileinsatz ist insoweit im Längsschnitt U-förmig, wobei ein innerer Schenkel von dem inneren Hohlzylinder und ein weiterer Schenkel von dem äußeren Hohlzylinder dargestellt werden. Den Boden bildet das Ringelement, welches die Hohlzylinder in radialer Richtung verbindet. Der innere Hohlzylinder ist nun derart angeordnet, dass der Magnetanker und/oder das Schließelement eine zentrale Ausnehmung des inneren Hohlzylinders durchgreifen. Gleichzeitig wird der innere Hohlzylinder von der Magnetbaugruppe wenigstens bereichsweise umgriffen. Die Aufnahme liegt entsprechend zwischen dem inneren Hohlzylinder und dem äußeren Hohlzylinder vor. In radialer Richtung von innen nach außen gesehen besteht das Magnetventil also aus dem Magnetanker beziehungsweise dem Schließelement, dem inneren Hohlzylinder, der Magnetbaugruppe und dem äußeren Hohlzylinder. Selbstverständlich können zwischen diesen Elementen weitere Elemente angeordnet sein, welche hier nicht erwähnt sind. Der innere Hohlzylinder ist vorzugsweise koaxial zu dem äußeren Hohlzylinder angeordnet. Der Ventileinsatz ist bevorzugt einstückig ausgeführt, die beiden Hohlzylinder und das Ringelement sind insoweit gemeinsam ausgebildet und materialeinheitlich. Der Ventileinsatz besteht bevorzugt aus einem magnetisierbaren Material, insbesondere einem Metall oder einer Metalllegierung. Der von der Magnetbaugruppe erzeugte magnetische Fluss kann also von dem Ventileinsatz in radialer Richtung nach innen geführt werden.

Eine Weiterbildung der Erfindung sieht vor, dass der Ventileinsatz nur über das Abdeckelement mit dem Führungselement verbunden ist. Es liegt also keine unmittelbare Verbindung zwischen dem Ventileinsatz und dem Führungselement vor. Auf diese Weise wird eine kostengünstige und Gewicht sparende Ausführung des Magnetventils erzielt.

Die Erfindung betrifft weiterhin ein Verfahren zur Montage eines Magnetventils, insbesondere gemäß den vorstehenden Ausführungen, wobei das Magnetventil über einen Ventileinsatz, der eine aus wenigstens einer Magnetspule und einem Wicklungsträger bestehende Magnetbaugruppe wenigstens bereichsweise umgreift, und über ein aubenartiges Führungselement, das einen mittels der Magnetbaugruppe axial verlagerbaren Magnetanker führt, verfügt, wobei der Magnetanker mit einem in einer Geschlossenstellung mit einem Ventilsitz des Magnetventils zum Unterbrechen einer Strömungsverbindung durch das Magnetventil dichtend zusammenwirkenden Schließelement wirkverbunden wird, wobei das Führungselement bei der Montage derart angeordnet wird, dass es den Magnetanker in jeder möglichen Stellung des Magnetankers in axialer Richtung lediglich teilweise übergreift. Dabei ist vorgesehen, dass an dem Ventilgehäuse eine Aufnahme für die Magnetbaugruppe vorgesehen ist, die mit einem an dem Ventilgehäuse befestigten Abdeckelement verschlossen wird, wobei das Abdeckelement derart zwischen dem Ventileinsatz und dem Führungselement eingepresst wird, dass eine kraftschlüssige Befestigung des Abdeckelements zumindest an dem Ventileinsatz gegeben ist, wobei das Führungselement in axialer Richtung an die Magnetbaugruppe unmittelbar angrenzt oder von ihr beabstandet ist, und wobei die Aufnahme mit einer den Ventilsitz aufweisenden Ventilkammer zumindest zeitweise strömungstechnisch verbunden ist. Das Magnetventil kann gemäß den vorstehenden Ausführungen weitergebildet sein. Es bietet die bereits genannten Vorteile, nämlich dass durch das lediglich teilweise Übergreifen des Magnetankers durch das Führungselement eine effiziente Führung des Magnetflusses erzielt wird.

Eine Weiterbildung der Erfindung sieht vor, dass das Magnetventil in einer Montageausnehmung eines Gehäuses montiert wird, indem die Magnetbaugruppe und das den Ventileinsatz und das haubenartige Führungselement aufweisende Ventilgehäuse gemeinsam und gleichzeitig wenigstens bereichsweise in die Montageausnehmung eingebracht werden. Es ist also nicht, wie aus dem Stand der Technik bekannt, vorgesehen, dass zunächst das Ventilgehäuse in die Montageausnehmung teilweise eingebracht wird und anschließend die Magnetbaugruppe, insbesondere gemeinsam mit dem Steuergerät, auf das Ventilgehäuse aufgesetzt wird. Vielmehr wird das Magnetventil bereits vor der Montage vollständig betriebsfertig zusammengesetzt, wobei das Ventilgehäuse und die Magnetbaugruppe zusammengefügt werden. Dabei ist es insbesondere vorgesehen, das Ventilgehäuse mit dem Ventileinsatz, die Magnetbaugruppe, den Magnetanker, das Schließelement und das Führungselement bereitzustellen und zueinander anzuordnen. Gleichzeitig oder nachfolgend wird die Magnetbaugruppe in der Aufnahme des Ventileinsatzes angeordnet.

Anschließend wird die Aufnahme mit dem Abdeckelement verschlossen und die Verbindung zwischen dem Abdeckelement und dem Ventilgehäuse, insbesondere dem Führungselement, hergestellt. Das Herstellen der Verbindung erfolgt dabei vorzugsweise von außen, wenn die Verbindung über die Umgebung des Magnetventils zugänglich ist. Anschließend wird das Magnetventil in die Montageausnehmung des Gehäuses eingebracht und dort montiert. Alternativ kann es auch vorgesehen sein, dass die vorstehend genannten Teile des Magnetventils bereits in die Montageausnehmung eingebracht werden und erst in der Montageaufnehmung die Aufnahme mit dem Abdeckelement verschlossen und/oder die Verbindung zwischen dem Abdeckelement und dem Ventilgehäuse, insbesondere dem Führungselement, hergestellt wird. Beide Ausführungsformen des Verfahrens erlauben eine schnelle und einfache Montage des Magnetventils, wobei gleichzeitig sichergestellt wird, dass der Magnetfluss zwischen Magnetbaugruppe und Magnetanker optimiert wird.

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: einen Längsschnitt durch ein Magnetventil.

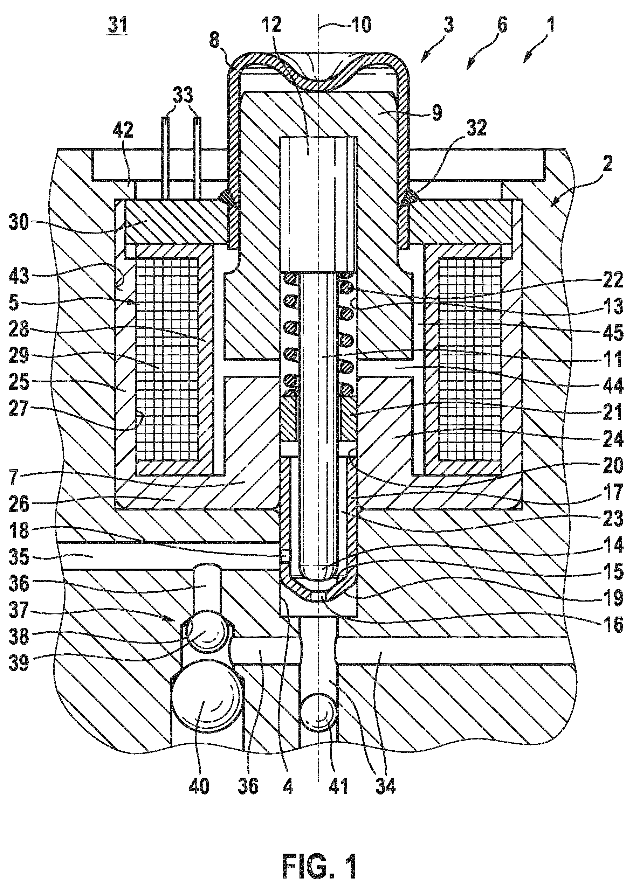

Die Figur 1 zeigt eine schematische Längsschnittansicht einer Magnetventilanordnung 1, die ein Gehäuse 2 mit wenigstens einem Magnetventil 3 umfasst. Das Magnetventil 3 ist in einer Montageausnehmung 4 angeordnet, welche beispielsweise als Bohrung, insbesondere als Stufenbohrung, in dem Gehäuse 2 ausgebildet ist. Das Gehäuse 2 liegt beispielsweise als Hydraulikgehäuse, insbesondere als Pumpengehäuse, vor.

Das Magnetventil 3 weist eine Magnetbaugruppe 5 und ein Ventilgehäuse 6 auf. Das Ventilgehäuse 6 besteht unter anderem aus einem Ventileinsatz 7 und einem Führungselement 8. In dem Ventilgehäuse 6, insbesondere in dem Führungselement 8, ist ein Magnetanker 9 bezüglich einer Längsachse 10 des Magnetventils 3 in axialer Richtung verlagerbar angeordnet. Das Führungselement 8 ist dabei derart angeordnet, dass es den Magnetanker 9 in radialer Richtung führt, also insbesondere eine Bewegung des Magnetankers 9 in radialer Richtung nicht oder lediglich über eine geringe Distanz zulässt. Das Führungselement 8 bildet insoweit eine Lagerung für den Magnetanker 9 aus, welche ihn in radialer Richtung im Wesentlichen festsetzt, jedoch eine Verlagerung in axialer Richtung ermöglicht. Der Magnetanker 9 ist mit einem Schließelement 11 wirkverbunden. Zu diesem Zweck weist das Schließelement 11 einen durchmesservergrößerten Haltebereich 12 auf, der in eine Halteöffnung 13 des Magnetankers 9 eingreift. Der Haltebereich 12 verfügt in radialer Richtung über größere Abmessungen als weitere Bereiche des Schließelements 11. Der Haltebereich 12 hat dabei vorzugsweise Außenabmessungen, welche Innenabmessungen der Halteöffnungen 13 im Wesentlichen entsprechen oder geringfügig größer als diese sind. Der Haltebereich 12 wird beispielsweise in die Halteöffnung 13 eingepresst und ist nachfolgend in dieser durch Kraftschluss gehalten.

Auf seiner dem Haltebereich 12 abgewandten Seite weist das Schließelement 11 ein Verschlussstück 14 auf, welches beispielsweise kalottenförmig ist. In einer Schließposition des Magnetankers 9 beziehungsweise des Schließelements 11 wirkt das Verschlussstück 14 dichtend mit einem Ventilsitz 15 zusammen, um eine Strömungsverbindung durch das Magnetventil 3 zu unterbrechen. Zu diesem Zweck dichtet es eine zentrale Öffnung 16 des Ventilsitzes 15 ab. Die Öffnung 16 dient bevorzugt als Einlass des Magnetventils 3. Der Ventilsitz 15 und die Öffnung 16 liegen beispielsweise in einem Ventilkörper 17 vor, welcher eine weitere Öffnung 18 aufweist, die als Auslass dient. Die Öffnung 16 ermöglicht insoweit ein Einströmen eines Fluids in das Magnetventil 3 in axialer Richtung, also entlang der Längsachse 10, während die Öffnung 18 ein radiales Abströmen zulässt. Der Ventilkörper 17 ist im Längsschnitt U-förmig ausgebildet, wobei die Öffnung 16 beziehungsweise der Ventilsitz 15 in einem Boden 19 des Ventilkörpers 17 vorliegen. Mit seiner dem Boden 19 gegenüberliegenden Seite ist der Ventilkörper 17 an dem Ventileinsatz 7 befestigt, insbesondere in einer Öffnung 20 des Ventilkörpers 17. Beispielsweise ist der Ventilkörper 17 durch Einpressen in der Öffnung 20 befestigt.

In dem Ventileinsatz 7 ist ferner eine Federauflage 21 befestigt, vorzugsweise ebenfalls durch Einpressen in die Öffnung 20. Alternativ kann auch der Ventilkörper 17 als Federauflage 21 dienen. Die Federauflage 21 ist im Wesentlichen ringförmig ausgebildet und umgibt das Schließelement 11 in Umfangsrichtung wenigstens bereichsweise. Ein Federelement 22 stützt sich mit einem ersten Ende auf der Federauflage 21 und mit einem zweiten, dem ersten Ende gegenüberliegenden Ende an dem Schließelement 11 und/oder dem Magnetanker 9 ab. Das Federelement 22 ist dabei bevorzugt als Druckfeder ausgebildet, bewirkt also eine Federkraft, welche den Magnetanker 9 von dem Ventileinsatz 7 beziehungsweise das Verschlussstück 14 von dem Ventilsitz 15 fortdrängt. Das Federelement 22 drängt insoweit den Magnetanker 9 beziehungsweise das Schließelement 11 in eine Offenstellung. Das Magnetventil 3 liegt folglich als stromlos geöffnetes Magnetventil vor. Alternativ kann das Magnetventil 3 selbstverständlich entweder durch eine andere Anordnung des Federelements 22 beziehungsweise durch eine Ausbildung des Federelements 22 als Zugfeder als stromlos geschlossenes Magnetventil vorliegen. Das Ventilgehäuse 6 und die diesem zugeordneten Elemente schließen eine Ventilkammer 23 des Magnetventils 3 beziehungsweise einen Fluidführungsbereich ein.

Der Ventileinsatz 7 ist, im Längsschnitt gesehen, beidseitig der Längsachse 10 im Wesentlichen U-förmig ausgebildet. Das bedeutet, dass er einen inneren Hohlzylinder 24, einen den inneren Hohlzylinder 24 koaxial umgebenden äußeren Hohlzylinder 25 und ein die Hohlzylinder 24 und 25 auf ihrer dem Führungselement 8 abgewandten Seite verbindendes Ringelement 26 aufweist. Dabei liegen die beiden Hohlzylinder 24 und 25 sowie das Ringelement 26 als gemeinsames Element vor, sind also einstückig und vorzugsweise materialeinheitlich ausgebildet. Die Erstreckung des inneren Hohlzylinders 24 in axialer Richtung ist zum Beispiel geringer, insbesondere in etwa halb so groß wie die axiale Erstreckung des äußeren Hohlzylinders 25. Alternativ kann der innere Hohlzylinder 24 auch vollständig entfallen beziehungsweise lediglich als Fortsetzung des Ringelements 26 vorliegen.

Der innere Hohlzylinder 24 weist die Öffnung 20 auf, in welcher der Ventilkörper 17 und die Federauflage 21 angeordnet sind. Der Ventilkörper 17 kann alternativ auch von dem Ventileinsatz 7 dargestellt werden. Die Hohlzylinder 24 und 25 bilden gemeinsam mit dem Ringelement 26 eine Aufnahme 27 aus, in welcher die Magnetbaugruppe 5 angeordnet ist. Die Magnetbaugruppe 5 besteht aus einem Wicklungsträger 28 und wenigstens einer Magnetspule 29. Die Magnetbaugruppe 5 liegt in axialer Richtung gesehen wenigstens bereichsweise auf Höhe des Magnetankers 9. In der hier vorgestellten Ausführungsform wird die Magnetbaugruppe 5 - im Längsschnitt gesehen - radial innenseitig von dem inneren Hohlzylinder 24 und radial außenseitig von dem äußeren Hohlzylinder 25 umgeben. Sie ruht dabei auf dem Ringelement 26, welches insoweit einen Boden der Aufnahme 27 definiert.

Auf der dem Ringelement 26 gegenüberliegenden Seite der Aufnahme 27 ist ein Abdeckelement 30 vorgesehen, welches die Aufnahme 27 gegenüber einer Umgebung 31 des Magnetventils 3 verschließt. Das Abdeckelement 30 ist vorzugsweise ringförmig und steht mit seiner radial außen liegenden Seite mit dem Ventileinsatz 7 beziehungsweise dessen äußerem Hohlzylinder 25 und mit seiner radial innen liegenden Seite mit dem Führungselement 8 in Berührkontakt.

Erfindungsgemäß ist es derart zwischen diese beiden Elemente eingepresst, dass eine kraftschlüssige Befestigung des Abdeckelements 30 zumindest an dem Ventileinsatz 7 gegeben ist. Um ein zuverlässiges Halten des Abdeckelements 30 zu gewährleisten, ist es mit dem Ventilgehäuse 6, insbesondere mit dem Führungselement 8 mittels einer Verbindung 32 befestigt. Die Verbindung 32 ist vorzugsweise in Umfangsrichtung durchgehend ausgebildet. Alternativ können jedoch auch mehrere Verbindungen 32 vorliegen, welche in Umfangsrichtung voneinander beabstandet sind. Die Verbindung 32 liegt vorzugsweise als Schweißverbindung, insbesondere als Laserschweißverbindung vor. Sie ist insoweit eine stoffschlüssige Verbindung. Alternativ kann jedoch auch eine formschlüssige Verbindung vorgesehen sein, welche beispielsweise durch ein Verstemmen mit dem Ventilgehäuse 6 beziehungsweise dem Führungselement 8 erzielt wird.

Das Abdeckelement 30 wird von elektrischen Anschlüssen 33 für die Magnetbaugruppe 5 durchsetzt. Weil die Aufnahme 27, insbesondere in Abhängigkeit von einer Position des Magnetankers 9, in Strömungsverbindung mit der Ventilkammer 23 steht, sind die Durchtrittsstellen der elektrischen Anschlüsse 33 durch das Abdeckelement 30 mittels einer nicht dargestellten Dichtung abgedichtet. Die Magnetbaugruppe 5 ist zwischen dem Abdeckelement 30 und dem Ringelement 26 ortsfest in der Aufnahme 27 gehalten. Sie ist insofern fest in das Ventilgehäuse 6 beziehungsweise in den Ventileinsatz 7 integriert. Die Aufnahme 27 ist im Längsschnitt beidseitig im Wesentlichen rechteckig und im Querschnitt im Wesentlichen kreisförmig ausgebildet, jedoch sind auch davon abweichende Formen denkbar, die an die Form der Magnetbaugruppe 5 angepasst sind.

Das Magnetventil 3 ist in der Montageausnehmung 4 angeordnet, beispielsweise in diese eingepresst. In dem Gehäuse 2, in welchem die Montageausnehmung 4 vorliegt, sind ein Einlasskanal 34 und ein Auslasskanal 35 ausgebildet, die jeweils strömungstechnisch mit der Öffnung 16 beziehungsweise der Öffnung 18 verbunden sind. In dem Hydraulikgehäuse 2 ist ferner ein Bypasskanal 36 ausgebildet. Dieser verbindet den Einlasskanal 34 über ein Rückschlagventil 37 mit dem Auslasskanal 35. Das Rückschlagventil 37 besteht aus einem Rückschlagventilsitz 38 und einem Rückschlagschließelement 39, welches hier kugelförmig ausgebildet ist. Der Rückschlagventilsitz 38 wird insbesondere von einer Stufenbohrung definiert. Zur Herstellung der Kanäle 34, 35 und 36 sind weitere Bohrungen in dem Gehäuse 2 vorgesehen, welche nach der Ausbildung der Kanäle 34, 35 und 36 mittels Verschlusskörpern 40 und 41, insbesondere Kugeln, abgedichtet werden.

Das Magnetventil 3 ist in der Montageausnehmung 4 mittels eines Halteelements 42 fixiert, sodass es in axialer Richtung unverschiebbar in der Montageausnehmung 4 gehalten ist. Das Halteelement 42 liegt in der hier dargestellten Ausführungsform als Steg vor, welcher in radialer Richtung ausgehend von einer Wand 43 der Montageausnehmung 4 nach innen verläuft. Das Halteelement 42 wird beispielsweise durch eine radiale Verstemmung des Gehäuses 2 ausgebildet. Er ist insbesondere ringförmig, erstreckt sich also wenigstens bereichsweise, insbesondere vollständig, über den Umfang der Montageausnehmung 4. Das Halteelement 42 liegt in axialer Richtung sowohl an dem Ventileinsatz 7 beziehungsweise an dessen äußerem Hohlzylinder 25 als auch an dem Abdeckelement 30 an. Das Halteelement 42 fixiert insoweit sowohl das Ventilgehäuse 6 als auch die Magnetbaugruppe 5 gemeinsam in der Montageausnehmung 4 des Gehäuses 2.

Insbesondere bedingt durch die Anordnung der Verbindung 32, welche nun von außen, also aus der Umgebung 31, zugänglich ist, kann das Führungselement 8 in axialer Richtung kürzer ausgestaltet werden, als dies aus dem Stand der Technik bekannt ist. Dabei ist vorgesehen, dass das Führungselement 8 den Magnetanker 9 in axialer Richtung lediglich teilweise übergreift. Das bedeutet, dass in jeder Stellung des Magnetankers 9, also auch in der in der Figur dargestellten Offenstellung, in welcher der Magnetanker 9 soweit als möglich in dem Führungselement 8 vorliegt, letzteres in axialer Richtung nur einen Bereich des Magnetankers 9 überdeckt. Dabei ist das Führungselement 8 derart ausgestaltet, dass es eine radiale Führung für den Magnetanker 9 bildet. Entsprechend weist es Innenabmessungen auf, welche im Wesentlichen den Außenabmessungen des Magnetankers 9 in radialer Richtung entsprechen. Der Magnetanker 9 ist seinerseits in axialer Richtung von dem inneren Hohlzylinder 24 zumindest in seiner Offenstellung beabstandet. Vorzugsweise gilt dies auch für die Geschlossenstellung, in welcher der Magnetanker 9 so weit als möglich in Richtung des Ventilsitzes 5 verlagert ist. Entsprechend liegt zwischen dem Magnetanker 9 und dem Ventileinsatz 7 beziehungsweise dessen inneren Hohlzylinder 24 ein Spalt 44 vor, über welchen eine Strömungsverbindung zwischen der Aufnahme 27 und der Ventilkammer 23 ausgebildet ist.

Das Führungselement 8 erstreckt sich mit seiner dem Ventileinsatz 7 zugewandten Seite in axialer Richtung lediglich geringfügig über das Abdeckelement 30 hinaus. Alternativ kann es auch vorgesehen sein, dass das Führungselement 8 auf der der Aufnahme 27 zugewandten Seite des Abdeckelements 30 bündig mit diesem abschließt. Insoweit übergreift das Führungselement 8 in axialer Richtung nur einen Teil der Magnetbaugruppe 5 oder grenzt unmittelbar an diese an. Alternativ kann selbstverständlich das Führungselement 8 in axialer Richtung auch von der Magnetbaugruppe 5 beabstandet sein. Eine alternative Ausführungsform des Abdeckelements 30 sieht vor, dass dieses im Längsschnitt (beidseitig) L-förmig ausgebildet ist, also auf seiner dem Führungselement 8 zugewandten Seite einen sich nach oben erstreckenden Führungssteg aufweist. Insoweit besteht das Abdeckelement 30 aus einem das Führungselement 8 einschließenden Rohr, ausgehend von welchem sich ein Radialsteg in radialer Richtung nach außen, also hin zu dem äußeren Hohlzylinder 25, erstreckt. Der Radialsteg weist dabei eine axiale Erstreckung auf, welche lediglich einen Teil der axialen Erstreckung des Rohrs ausmacht.

Die Magnetbaugruppe 5 und insbesondere ihr Wicklungsträger 28 sind in radialer Richtung nur durch einen Fluidspalt 45 von dem Magnetanker 9 beabstandet. Das bedeutet, dass zwischen dem Magnetanker 9 und der Magnetbaugruppe 5 kein weiteres Element des Magnetventils 3 vorgesehen ist, sondern lediglich der mit Fluid gefüllte Fluidspalt 45. Auf diese Weise wird ein optimaler Magnetfluss ausgehend von der Magnetbaugruppe 5 hin zu dem Magnetanker 9 erzielt. Zur Ausbildung des Fluidspalts 45 kann beispielsweise der Magnetanker 9 in radialer Richtung im Bereich der Magnetbaugruppe 5 geringere Abmessungen aufweisen als der innere Hohlzylinder 24 (hier nicht dargestellt), sodass die Magnetgruppe 5 stets von dem Magnetanker 9 derart beabstandet ist, dass auch bei einem toleranzbedingten Verkippen des Magnetankers 9 kein Berührkontakt zwischen dem Magnetanker 9 und der Magnetbaugruppe 5 auftreten kann.

## Patentansprüche

1. Magnetventil (3) mit einer Magnetbaugruppe (5) und einem Ventilgehäuse (6), wobei das Ventilgehäuse (6) einen Ventileinsatz (7), der die aus wenigstens einer Magnetspule (29) und einem Wicklungsträger (28) bestehende Magnetbaugruppe (5) wenigstens bereichsweise umgreift, und ein haubenartiges Führungselement (8), das einen mittels der Magnetbaugruppe (5) axial verlagerbaren Magnetanker (9) führt, aufweist, wobei der Magnetanker (9) mit einem in einer Geschlossenstellung mit einem Ventilsitz (15) des Magnetventils (3) zum Unterbrechen einer Strömungsverbindung durch das Magnetventil (3) dichtend zusammenwirkenden Schließelement (11) wirkverbunden ist und das Führungselement (8) den Magnetanker (9) in jeder möglichen Stellung des Magnetankers (9) in axialer Richtung lediglich teilweise übergreift, **dadurch gekennzeichnet, dass** an dem Ventilgehäuse (6) eine Aufnahme (27) für die Magnetbaugruppe (5) vorgesehen ist, die mit einem an dem Ventilgehäuse (6) befestigten Abdeckelement (30) verschlossen ist, wobei das Abdeckelement (30) derart zwischen dem Ventileinsatz (7) und dem Führungselement (8) eingepresst ist, dass eine kraftschlüssige Befestigung des Abdeckelements (30) zumindest an dem Ventileinsatz (7) gegeben ist, wobei das Führungselement (8) in axialer Richtung an die Magnetbaugruppe (5) unmittelbar angrenzt oder von ihr beabstandet ist, und wobei die Aufnahme (27) mit einer den Ventilsitz (15) aufweisenden Ventilkammer (23) zumindest zeitweise strömungstechnisch verbunden ist.

2. Magnetventil nach Anspruch 1, **dadurch gekennzeichnet, dass** das Abdeckelement (30) über eine von einer Umgebung (31) des Magnetventils (3) zugängliche Verbindung (32) an dem Ventilgehäuse (6) befestigt ist.

3. Magnetventil nach einem der vorhergehenden Ansprüche, **dadurch gekennzeichnet, dass** das Ventilgehäuse (6) das Führungselement (8) und den die Aufnahme (27) ausbildenden oder mit ausbildenden Ventileinsatz (7) aufweist, wobei die Magnetbaugruppe (5) das Führungselement (8) und/oder der Ventileinsatz (7) die Magnetbaugruppe (5) wenigstens bereichsweise umgreift.

4. Magnetventil nach einem der vorhergehenden Ansprüche, **dadurch gekennzeichnet, dass** die Magnetbaugruppe (5), insbesondere der Wicklungsträger (28) der Magnetbaugruppe (5), in radialer Richtung nur durch einen Fluidspalt (45) von dem Magnetanker (9) beabstandet ist.

5. Magnetventil nach einem der vorhergehenden Ansprüche, **dadurch gekennzeichnet, dass** der Ventileinsatz (7) einen inneren Hohlzylinder (24), einen äußeren Hohlzylinder (25) und ein die Hohlzylinder (24,25) in radialer Richtung verbindendes Ringelement (26) aufweist, wobei der innere Hohlzylinder (24) von der Magnetbaugruppe (5) wenigstens bereichsweise umgriffen ist.

6. Magnetventil nach einem der vorhergehenden Ansprüche, **dadurch gekennzeichnet, dass** der Ventileinsatz (7) nur über das Abdeckelement (30) mit dem Führungselement (8) verbunden ist.

7. Verfahren zur Montage eines Magnetventils (3), insbesondere nach einem oder mehreren der vorhergehenden Ansprüche, wobei das Magnetventil (3) über einen Ventileinsatz (7), der eine aus wenigstens einer Magnetspule (29) und einem Wicklungsträger (28) bestehende Magnetbaugruppe (5) wenigstens bereichsweise umgreift, und ein haubenartiges Führungselement (8), das einen mittels der Magnetbaugruppe (5) axial verlagerbaren Magnetanker (9) führt, verfügt, wobei der Magnetanker (9) mit einem in einer Geschlossenstellung mit einem Ventilsitz (15) des Magnetventils (3) zum Unterbrechen einer Strömungsverbindung durch das Magnetventil (3) dichtend zusammenwirkenden Schließelement (11) wirkverbunden wird und das Führungselement (8) bei der Montage derart angeordnet wird, dass es den Magnetanker (9) in jeder möglichen Stellung des Magnetankers (9) in axialer Richtung lediglich teilweise übergreift, **dadurch gekennzeichnet, dass** an dem Ventilgehäuse (6) eine Aufnahme (27) für die Magnetbaugruppe (5) vorgesehen ist, die mit einem an dem Ventilgehäuse (6) befestigten Abdeckelement (30) verschlossen wird, wobei das Abdeckelement (30) derart zwischen dem Ventileinsatz und dem Führungselement (8) eingepresst wird, dass eine kraftschlüssige Befestigung des Abdeckelements (30) zumindest an dem Ventileinsatz (7) gegeben ist, wobei das Führungselement (8) in axialer Richtung an die Magnetbaugruppe (5) unmittelbar angrenzt oder von ihr beabstandet ist, und wobei die Aufnahme (27) mit einer den Ventilsitz (15) aufweisenden Ventilkammer (23) zumindest zeitweise strömungstechnisch verbunden ist.

8. Verfahren nach Anspruch 7, **dadurch gekennzeichnet, dass** das Magnetventil (3) in einer Montageausnehmung (4) eines Gehäuses (2) montiert wird, indem die Magnetbaugruppe (5) und das den Ventileinsatz (7) und das haubenartige Führungselement (8) aufweisende Ventilgehäuse (6) gemeinsam und gleichzeitig wenigstens bereichsweise in die Montageausnehmung (4) eingebracht werden.

## Claims

1. Solenoid valve (3) having a magnet assembly (5) and having a valve housing (6), wherein the valve housing (6) has a valve insert (7), which engages at least in regions around the magnet assembly (5) composed of at least one magnet coil (29) and of a winding support (28), and has a cap-like guide element (8) which guides a magnet armature (9) which can be displaced axially by way of the magnet assembly (5), wherein the magnet armature (9) is operatively connected to a closing element (11) which, in a closed position, interacts sealingly with a valve seat (15) of the solenoid valve (3) in order to shut off a flow connection through the solenoid valve (3), and the guide element (8) engages only partially over the magnet armature (9) in an axial direction in every possible position of the magnet armature (9), **characterized in that**, on the valve housing (6), there is provided a receptacle (27) for the magnet assembly (5), which receptacle is closed off by way of a cover element (30) which is fastened to the valve housing (6), wherein the cover element (30) is pressed in between the valve insert (7) and the guide element (8) such that a non-positively locking fastening of the cover element (30) at least to the valve insert (7) is realized, wherein the guide element (8) directly adjoins the magnet assembly (5), or is spaced apart therefrom, in an axial direction, and wherein the receptacle (27) is at least intermittently connected in terms of flow to a valve chamber (23) which has the valve seat (15).

2. Solenoid valve according to Claim 1, **characterized in that** the cover element (30) is fastened to the valve housing (6) by way of a connection (32) which is accessible from surroundings (31) of the solenoid valve (3).

3. Solenoid valve according to one of the preceding claims, **characterized in that** the valve housing (6) has the guide element (8) and has the valve insert (7) which forms or jointly forms the receptacle (27), wherein the magnet assembly (5) engages at least in regions around the guide element (8) and/or the valve insert (7) engages at least in regions around the magnet assembly (5).

4. Solenoid valve according to one of the preceding claims, **characterized in that** the magnet assembly (5), in particular the winding carrier (28) of the magnet assembly (5), is spaced apart from the magnet armature (9) in a radial direction only by a fluid gap (45).

5. Solenoid valve according to one of the preceding claims, **characterized in that** the valve insert (7) has an inner hollow cylinder (24), an outer hollow cylinder (25) and a ring-shaped element (26) which connects the hollow cylinders (24, 25) in a radial direction, wherein the inner hollow cylinder (24) is engaged around at least in regions by the magnet assembly (5).

6. Solenoid valve according to one of the preceding claims, **characterized in that** the valve insert (7) is connected to the guide element (8) only by way of the cover element (30).

7. Method for installing a solenoid valve (3), in particular according to one or more of the preceding claims, wherein the solenoid valve (3) has a valve insert (7), which engages at least in regions around a magnet assembly (5) composed of at least one magnet coil (29) and of a winding support (28), and has a cap-like guide element (8) which guides a magnet armature (9) which can be displaced axially by way of the magnet assembly (5), wherein the magnet armature (9) is operatively connected to a closing element (11) which, in a closed position, interacts sealingly with a valve seat (15) of the solenoid valve (3) in order to shut off a flow connection through the solenoid valve (3), and the guide element (8) is, during the installation process, arranged so as to engage only partially over the magnet armature (9) in an axial direction in every possible position of the magnet armature (9), **characterized in that**, on the valve housing (6), there is provided a receptacle (27) for the magnet assembly (5), which receptacle is closed off by way of a cover element (30) which is fastened to the valve housing (6), wherein the cover element (30) is pressed in between the valve insert and the guide element (8) such that a non-positively locking fastening of the cover element (30) at least to the valve insert (7) is realized, wherein the guide element (8) directly adjoins the magnet assembly (5), or is spaced apart therefrom, in an axial direction, and wherein the receptacle (27) is at least intermittently connected in terms of flow to a valve chamber (23) which has the valve seat (15).

8. Method according to Claim 7, **characterized in that** the solenoid valve (3) is installed in an installation recess (4) of a housing (2) by virtue of the magnet assembly (5) and the valve housing (6), which has the valve insert (7) and the cap-like guide element (8), being introduced jointly and simultaneously, at least in regions, into the installation recess (4).

## Revendications

1. Électrovanne (3) comprenant un module magnétique (5) et un boîtier de vanne (6), le boîtier de vanne (6) présentant un insert de vanne (7) qui vient en prise au moins en partie autour du module magnétique (5) constitué d'au moins une bobine magnétique (29) et d'un support d'enroulement (28), et un élément de guidage de type capot (8) qui guide un induit magnétique (9) déplaçable axialement au moyen du module magnétique (5), l'induit magnétique (9) étant en liaison fonctionnelle avec un élément de fermeture (11) coopérant de manière hermétique dans une position fermée avec un siège de vanne (15) de l'électrovanne (3) pour interrompre une liaison fluidique à travers l'électrovanne (3) et l'élément de guidage (8) venant en prise dans la direction axiale au moins en partie par-dessus l'induit magnétique (9) dans chaque position possible de l'induit magnétique (9), **caractérisée en ce qu**'un logement (27) pour le module magnétique (5) est prévu au niveau du boîtier de vanne (6), lequel est fermé par un élément de recouvrement (30) fixé au boîtier de vanne (6), l'élément de recouvrement (30) étant pressé entre l'insert de vanne (7) et l'élément de guidage (8) de telle sorte qu'une fixation par engagement par force de l'élément de recouvrement (30) soit réalisée au moins au niveau de l'insert de vanne (7), l'élément de guidage (8) étant directement adjacent dans la direction axiale au module magnétique (5) ou étant espacé de celui-ci et le logement (27) étant connecté au moins temporairement par une technique fluidique à une chambre de vanne (23) présentant le siège de vanne (15).

2. Électrovanne selon la revendication 1, **caractérisée en ce que** l'élément de recouvrement (30) est fixé au boîtier de vanne (6) par le biais d'une liaison (32) accessible depuis un environnement (31) de l'électrovanne (3).

3. Électrovanne selon l'une quelconque des revendications précédentes, **caractérisée en ce que** le boîtier de vanne (6) présente l'élément de guidage (8) et l'insert de vanne (7) constituant le logement (27) ou incorporé à celui-ci, le module magnétique (5) venant en prise au moins en partie autour de l'élément de guidage (8) et/ou l'insert de vanne (7) venant en prise au moins en partie autour du module magnétique (5).

4. Électrovanne selon l'une quelconque des revendications précédentes, **caractérisée en ce que** le module magnétique (5), en particulier le support d'enroulement (28) du module magnétique (5), est espacé de l'induit magnétique (9) dans la direction radiale uniquement par un interstice fluidique (45).

5. Électrovanne selon l'une quelconque des revendications précédentes, **caractérisée en ce que** l'insert de vanne (7) présente un cylindre creux intérieur (24), un cylindre creux extérieur (25) et un élément annulaire (26) reliant dans la direction radiale les cylindres creux (24, 25), le cylindre creux intérieur (24) étant au moins en partie entouré par le module magnétique (5).

6. Électrovanne selon l'une quelconque des revendications précédentes, **caractérisée en ce que** l'insert de vanne (7) est connecté à l'élément de guidage (8) uniquement par le biais de l'élément de recouvrement (30).

7. Procédé de montage d'une électrovanne (3), en particulier selon l'une quelconque ou plusieurs des revendications précédentes, dans lequel l'électrovanne (3) dispose d'un insert de vanne (7) qui vient en prise au moins en partie autour d'un module magnétique (5) constitué d'au moins une bobine magnétique (29) et d'un support d'enroulement (28), et d'un élément de guidage de type capot (8) qui guide un induit magnétique (9) déplaçable axialement au moyen du module magnétique (5), l'induit magnétique (9) étant en liaison fonctionnelle avec un élément de fermeture (11) coopérant de manière hermétique dans une position fermée avec un siège de vanne (15) de l'électrovanne (3) pour interrompre une liaison fluidique à travers l'électrovanne (3) et l'élément de guidage (8) étant disposé, lors du montage, de telle sorte qu'il vienne en prise au moins en partie dans la direction axiale par-dessus l'induit magnétique (9) dans chaque position possible de l'induit magnétique (9), **caractérisé en ce qu'**un logement (27) pour le module magnétique (5) est prévu au niveau du boîtier de vanne (6), lequel est fermé avec un élément de recouvrement (30) fixé au boîtier de vanne (6), l'élément de recouvrement (30) étant pressé entre l'insert de vanne et l'élément de guidage (8) de telle sorte qu'une fixation par engagement par force de l'élément de recouvrement (30) au moins sur l'insert de vanne (7) soit réalisée, l'élément de guidage (8) étant directement adjacent au module magnétique (5) dans la direction axiale ou étant espacé de celui-ci, et le logement (27) étant connecté au moins temporairement par une technique fluidique à une chambre de vanne (23) présentant le siège de vanne (15).

8. Procédé selon la revendication 7, **caractérisé en ce que** l'électrovanne (3) est montée dans un évidement de montage (4) d'un boîtier (2), le module magnétique (5) et le boîtier de vanne (6) présentant l'insert de vanne (7) et l'élément de guidage de type capot (8) étant montés ensemble et simultanément au moins en partie dans l'évidement de montage (4).
